# FASCICULE DE BREVET EUROPEEN

(11) **EP 3 537 940 B1**
(45) Date de publication et mention de la délivrance du brevet: **07.09.2022**
(21) Numéro de dépôt: 17808544.5
(22) Date de dépôt: 10.11.2017
(51) Int. Cl.: A47J 37/06

(54) **APPAREIL DE CUISSON POUR LA CUISSON DE PRODUITS ALIMENTAIRES**
KOCHGERÄT ZUM KOCHEN VON LEBENSMITTELPRODUKTEN
COOKING APPLIANCE FOR COOKING FOOD PRODUCTS

(30) Priorité: 14.11.2016 FR 1661009
(43) Date de publication de la demande: 18.09.2019
(73) Titulaire: SEB S.A., 69130 Ecully (FR)
(72) Inventeur: VOLATIER, Sébastien, 21000 Dijon (FR)
(74) Mandataire: SEB Développement
(86) Numéro de dépôt international: PCT/FR2017/053068
(87) Numéro de publication internationale: WO 2018/087486

(56) Documents cités:
- DE-U1-202016 105 160
- GB-A- 2 355 390
- GB-A- 2 395 894
- US-A- 3 682 348
- US-A1- 2014 338 544
- US-B1- 6 439 108

## Description

La présente invention concerne un appareil de cuisson pour la cuisson de produits alimentaires.

Il est connu du document GB 2 395 894 un appareil de cuisson comportant une plaque de cuisson inférieure, une plaque de cuisson supérieure et un dispositif de réglage permettant d'ajuster l'écartement entre les plaques de cuissons. Cependant, un tel dispositif de réglage ne permet pas de mesurer l'écartement entre les plaques de cuisson.

Un appareil de cuisson, de type gril électrique, comporte de façon connue :
- une partie inférieure comportant une plaque de cuisson inférieure,
- une partie supérieure comportant une plaque de cuisson supérieure,
- un élément d'articulation reliant la partie supérieure à la partie inférieure et configuré de telle sorte que la partie supérieure est montée articulée par rapport à la partie inférieure pour définir au moins une position de chargement dans laquelle un aliment peut être placé sur la plaque de cuisson inférieure et au moins une position de cuisson dans laquelle l'aliment est enserré entre la plaque de cuisson inférieure et la plaque de cuisson supérieure,
- un dispositif de mesure configuré pour déterminer un écartement entre la plaque de cuisson inférieure et la plaque de cuisson supérieure, et donc pour déterminer l'épaisseur de l'aliment disposé entre les plaques de cuisson inférieure et supérieure, et
- une unité de gestion de cuisson configurée pour gérer la cuisson de l'aliment en fonction de l'écartement déterminé par le dispositif de mesure.

Le dispositif de mesure d'un tel appareil de cuisson comporte plus particulièrement :
- un élément d'actionnement mobile entre une première position et une deuxième position et disposé à proximité de l'élément d'articulation, l'élément d'articulation étant configuré pour exercer une force d'appui sur l'élément d'actionnement et pour le déplacer de la première position vers la deuxième position lorsque la partie supérieure est déplacée depuis une position de chargement vers une position de cuisson, et
- un élément de mesure configuré pour coopérer avec l'élément d'actionnement et pour déterminer l'écartement entre la plaque de cuisson inférieure et la plaque de cuisson supérieure en fonction de la position de l'élément d'actionnement.

Une telle configuration du dispositif de mesure, et notamment le fait que l'élément d'actionnement soit actionné par l'élément d'articulation, ne permet pas d'obtenir un déplacement suffisant de l'élément d'actionnement, ce qui conduit à une résolution limitée de la mesure de l'écartement entre les plaques de cuisson inférieure et supérieure, et entraine une imprécision de la mesure de l'épaisseur de l'aliment.

En effet, pendant la durée de vie de l'appareil de cuisson, des jeux mécaniques peuvent apparaître en particulier au niveau de l'élément d'articulation, ce qui nuit nécessairement à la résolution de mesure du dispositif de mesure, et donc à la gestion de la cuisson des aliments disposés entre les plaques de cuisson inférieure et supérieure.

La présente invention vise à remédier à tout ou partie de ces inconvénients.

Le problème technique à la base de l'invention consiste donc à fournir un appareil de cuisson qui assure une détermination optimale de l'écartement entre les plaques de cuisson inférieure et supérieure, et donc une gestion optimale de la cuisson d'un aliment disposé entre les plaques de cuisson inférieure et supérieure tout au long de la durée de vie de l'appareil de cuisson.

A cet effet, la présente invention concerne un appareil de cuisson pour la cuisson de produits alimentaires selon la revendication 1.

Une telle configuration du dispositif de mesure, et en particulier le fait que l'élément d'actionnement prenne appui directement contre l'une des parties inférieure ou supérieure permet de réduire la chaîne de cote, les incertitudes liées au positionnement des plaques, et les incertitudes liées aux jeux mécaniques qui pourraient apparaître pendant la durée de vie de l'appareil de cuisson, notamment au niveau de l'élément d'articulation. Ainsi, l'appareil de cuisson selon la présente invention présente une meilleure résolution de mesure, et permet donc d'assurer une gestion optimale de la cuisson d'un aliment disposé entre les plaques de cuisson inférieure et supérieure.

En outre, une telle configuration du dispositif de mesure permet son adaptation sur tout type d'architecture de gril, notamment quelle que soit la configuration de l'élément d'articulation.

L'appareil de cuisson peut en outre présenter une ou plusieurs des caractéristiques suivantes, prises seules ou en combinaison.

Selon un mode de réalisation de l'invention, l'élément de mesure est configuré pour mesurer une caractéristique représentative de la position de l'élément d'actionnement et pour déterminer l'écartement entre la plaque de cuisson inférieure et la plaque de cuisson supérieure à partir de la caractéristique représentative mesurée.

Selon un mode de réalisation de l'invention, la deuxième position de l'élément d'actionnement correspond à une position de fermeture dans laquelle la plaque de cuisson supérieure est au contact de la plaque de cuisson inférieure.

Selon un mode de réalisation de l'invention, l'élément d'actionnement est monté pivotant autour d'un axe de pivotement, l'appareil de cuisson étant configuré de telle sorte qu'un déplacement de la partie supérieure entre la position de chargement prédéterminée et la position de cuisson entraîne en rotation l'élément d'actionnement autour de son axe de pivotement.

Selon un mode de réalisation de l'invention, l'élément de mesure est configuré pour mesurer l'angle de rotation de l'élément d'actionnement autour de son axe de pivotement et pour déterminer l'écartement entre la plaque de cuisson inférieure et la plaque de cuisson supérieure à partir de l'angle de rotation mesuré.

Selon un mode de réalisation de l'invention, l'appareil de cuisson est configuré de telle sorte que l'écartement entre la plaque de cuisson inférieure et la plaque de cuisson supérieure varie linéairement en fonction de l'angle de rotation de l'élément d'actionnement.

Selon un autre mode de réalisation de l'invention, l'élément d'actionnement est monté mobile en translation selon une direction de déplacement sensiblement transversale à un plan général de la plaque de cuisson de la partie portant le dispositif de mesure. Selon un tel mode de réalisation de l'invention, l'élément de mesure peut par exemple être configuré pour mesurer la course de déplacement de l'élément d'actionnement et pour déterminer l'écartement entre la plaque de cuisson inférieure et la plaque de cuisson supérieure à partir de la course de déplacement mesurée.

Selon un mode de réalisation de l'invention, l'élément d'actionnement est configuré pour venir en appui contre l'une parmi la plaque de cuisson inférieure et la plaque de cuisson supérieure.

Selon un mode de réalisation de l'invention, l'élément d'actionnement comporte une partie d'appui configurée pour venir en appui contre l'autre parmi la partie inférieure et la partie supérieure, et par exemple contre l'une parmi la plaque de cuisson inférieure et la plaque de cuisson supérieure.

Selon un mode de réalisation de l'invention, la partie d'appui présente une forme générale de manivelle.

Selon un mode de réalisation de l'invention, la partie d'appui comporte un doigt d'appui qui peut s'étendre par exemple sensiblement parallèlement à l'axe de pivotement de l'élément d'actionnement.

Selon un mode de réalisation de l'invention, l'élément d'actionnement comporte une première partie d'appui configurée pour venir en appui contre l'une parmi la partie inférieure et la partie supérieure, et par exemple contre l'une parmi la plaque de cuisson inférieure et la plaque de cuisson supérieure, et une deuxième partie d'appui configurée pour venir en appui contre l'autre parmi la partie inférieure et la partie supérieure, et par exemple contre l'autre parmi la plaque de cuisson inférieure et la plaque de cuisson supérieure.

Selon un mode de réalisation de l'invention, la partie inférieure comporte un corps inférieur sur lequel est montée la plaque de cuisson inférieure, et la partie supérieure comporte un corps supérieur sur lequel est montée la plaque de cuisson supérieure.

Selon un mode de réalisation de l'invention, le dispositif de mesure est monté sur l'un parmi le corps inférieur et le corps supérieur.

Selon un mode de réalisation de l'invention, le dispositif de mesure est disposé sur un côté latéral de l'une parmi la partie inférieure et la partie supérieure.

Selon un mode de réalisation de l'invention, le dispositif de mesure est disposé sur un côté latéral de l'un parmi le corps inférieur et le corps supérieur.

Selon un mode de réalisation de l'invention, le dispositif de mesure est disposé au niveau d'une portion centrale d'un côté latéral de l'une parmi la partie inférieure et la partie supérieure.

Selon un mode de réalisation de l'invention, le dispositif de mesure est disposé sur une portion centrale d'un côté latéral de l'un parmi le corps inférieur et le corps supérieur.

Selon un mode de réalisation de l'invention, le dispositif de mesure est monté amovible sur l'une parmi la partie inférieure et la partie supérieure.

Selon un mode de réalisation de l'invention, le dispositif de mesure comporte un élément de sollicitation configuré pour solliciter l'élément d'actionnement vers la première position.

Selon un mode de réalisation de l'invention, l'élément de mesure comporte un potentiomètre ou un système de détection électromagnétique, notamment à effet Hall.

Selon un mode de réalisation de l'invention, le potentiomètre peut être un potentiomètre linéaire ou rotatif.

Selon un autre mode de réalisation de l'invention, l'élément de mesure pourrait comporter, à la place du potentiomètre ou du système de détection électromagnétique, une jauge de déformation, un système de détection optique à photo-détecteur, ou encore tout autre élément de mesure apte à mesurer l'angle de rotation ou bien la translation de l'élément d'actionnement.

Selon un mode de réalisation de l'invention, l'appareil de cuisson, et par exemple le dispositif de mesure, comporte un élément d'affichage configuré pour afficher l'écartement entre la plaque de cuisson inférieure et la plaque de cuisson supérieure.

Selon un mode de réalisation de l'invention, l'élément d'articulation est configuré de telle sorte que la partie supérieure est montée articulée par rapport à la partie inférieure entre la position de fermeture et une position d'ouverture complète dans laquelle la plaque de cuisson inférieure et la plaque de cuisson supérieure sont disposées sensiblement à 180° l'une de l'autre et par exemple s'étendent sensiblement dans un même plan.

Selon un mode de réalisation de l'invention, l'appareil de cuisson comprend des moyens de blocage de la partie supérieure par rapport à la partie inférieure dans une position d'ouverture intermédiaire prédéterminée située entre la position de fermeture et la position d'ouverture complète, notamment dans une position dans laquelle la plaque de cuisson supérieure forme un angle sensiblement égal à 90° avec la plaque de cuisson inférieure.

Cette disposition permet de libérer les mains de l'utilisateur lors du placement de l'aliment sur la plaque de cuisson inférieure.

Selon un mode de réalisation de l'invention, l'appareil de cuisson est configuré de telle sorte que l'élément d'actionnement est maintenu dans la première position lorsque la partie supérieure est déplacée entre la position de chargement prédéterminée et la position d'ouverture complète.

Selon un mode de réalisation de l'invention, le dispositif de mesure pourrait comporter une source d'alimentation électrique autonome, telle qu'une batterie ou une pile.

Selon un mode de réalisation de l'invention, le dispositif de mesure comporte une carte électronique. Une telle carte électronique peut par exemple comprendre ou être reliée à un module de communication sans fil, notamment du type Bluetooth Low Energy ou wifi, configuré pour communiquer avec une unité de traitement déportée, par exemple intégrée dans un terminal du type ordinateur portable ou un ordiphone, et pour transmettre les mesures effectuées par l'élément de mesure ou bien un signal significatif à l'unité de traitement.

Selon un mode de réalisation de l'invention, le dispositif de mesure comporte une première roue dentée solidaire de l'élément d'actionnement et l'élément de mesure comporte une deuxième roue dentée couplée en rotation à la première roue dentée.

Selon un mode de réalisation de l'invention, la première roue dentée a un axe de rotation confondu avec l'axe de pivotement de l'élément d'actionnement.

Selon un mode de réalisation de l'invention, le diamètre extérieur de la deuxième roue dentée est inférieur au diamètre extérieur de la première roue dentée. Par exemple, le rapport de démultiplication entre la deuxième roue dentée et la première roue dentée est compris entre 1,5 et 2, et peut par exemple être de l'ordre de 1,75. Une telle démultiplication permet d'utiliser toute la plage de fonctionnement du potentiomètre, et d'assurer une meilleure résolution de la mesure de l'écartement entre les plaques de cuisson inférieure et supérieure. En outre, une telle valeur du rapport de démultiplication a pour conséquence que le dispositif de mesure est peu sensible à l'augmentation éventuelle des jeux mécaniques dans les parties supérieure et/ou inférieure pendant la durée de vie de l'appareil de cuisson.

L'appareil de cuisson peut notamment être configuré par exemple de telle sorte qu'une variation de 40 mm de l'écartement entre la plaque de cuisson inférieure et la plaque de cuisson supérieure provoque une rotation angulaire du potentiomètre de 160°.

Selon un mode de réalisation de l'invention, l'élément d'articulation est du type à fil présentant une forme générale de U.

Selon un autre mode de réalisation, l'élément d'articulation comporte des bras définissant un premier axe de rotation des bras par rapport à la partie inférieure et un deuxième axe de rotation des bras par rapport à la partie supérieure, le premier axe étant disposé sensiblement à une extrémité arrière de la partie inférieure et le deuxième axe de rotation étant disposé sensiblement à mi-largeur de la partie supérieure, le premier axe de rotation étant sensiblement parallèle au deuxième axe de rotation.

Selon encore un mode de réalisation, l'élément d'articulation comporte une liaison pivot présentant un jeu mécanique définissant l'écartement maximal entre la plaque inférieure et la plaque supérieure lorsque celles-ci sont placées parallèlement l'une à l'autre.

Un tel élément d'articulation comprend par exemple un premier élément mâle et un deuxième élément mâle s'étendant selon deux directions opposées et disposés à l'arrière de la partie supérieure, et mobiles respectivement à l'intérieur d'un premier élément femelle et d'un deuxième élément femelle présentant des ouvertures opposées et disposés à l'arrière de la partie inférieure.

Selon un mode de réalisation de l'invention, l'élément d'articulation comporte une portion centrale allongée et deux bras latéraux, l'une parmi la partie inférieure et la partie supérieure étant montée articulée sur la portion centrale allongée autour d'un axe d'articulation, et chaque bras latéral comportant une portion d'extrémité montée articulée sur un côté latéral respectif de l'autre parmi la partie inférieure et la partie supérieure.

Selon un mode de réalisation de l'invention, la portion centrale allongée s'étend le long d'un côté arrière de l'une parmi la partie inférieure et la partie supérieure.

Selon un mode de réalisation de l'invention, l'axe de pivotement de l'élément d'actionnement est sensiblement parallèle à l'axe d'articulation de l'élément d'articulation.

Selon un mode de réalisation de l'invention, le dispositif de mesure comporte un élément de protection recouvrant au moins en partie l'élément d'actionnement et/ou l'élément de mesure.

Selon un mode de réalisation de l'invention, l'élément de protection est un capot de protection recouvrant au moins en partie l'élément d'actionnement et/ou l'élément de mesure.

Selon un autre mode de réalisation de l'invention, l'élément de protection est un soufflet de protection recouvrant au moins en partie l'élément d'actionnement.

Selon un mode de réalisation de l'invention, l'appareil de cuisson est un gril, et par exemple un gril électrique.

De toute façon l'invention sera bien comprise à l'aide de la description qui suit en référence aux dessins schématiques annexés représentant, à titre d'exemples non limitatifs, plusieurs formes d'exécution de cet appareil de cuisson.
La figure 1 est une vue en perspective d'un appareil de cuisson selon un premier mode de réalisation de l'invention.
La figure 2 est une vue avant de l'appareil de cuisson de la figure 1.
La figure 3 est une vue latérale de l'appareil de cuisson de la figure 1 en position de fermeture.
Les figures 4 à 6 sont des vues latérales de l'appareil de cuisson de la figure 1 dans différentes positions.
La figure 7 est une vue partielle avant, à l'échelle agrandie, de l'appareil de cuisson de la figure 1, montrant plus particulièrement un dispositif de mesure.
La figure 8 est une vue partielle en perspective, à l'échelle agrandie, de l'appareil de cuisson de la figure 1, montrant plus particulièrement le dispositif de mesure.
La figure 9 est une vue latérale de l'appareil de cuisson de la figure 1 dans une position de cuisson.
La figure 10 est une vue partielle en perspective d'un appareil de cuisson selon un deuxième mode de réalisation de l'invention.
La figure 11 est une vue latérale d'un appareil de cuisson selon un troisième mode de réalisation de l'invention.
La figure 12 est une vue latérale d'un appareil de cuisson selon un quatrième mode de réalisation de l'invention.
Les figures 13 et 14 sont des vues en perspective d'un appareil de cuisson selon un cinquième mode de réalisation de l'invention.

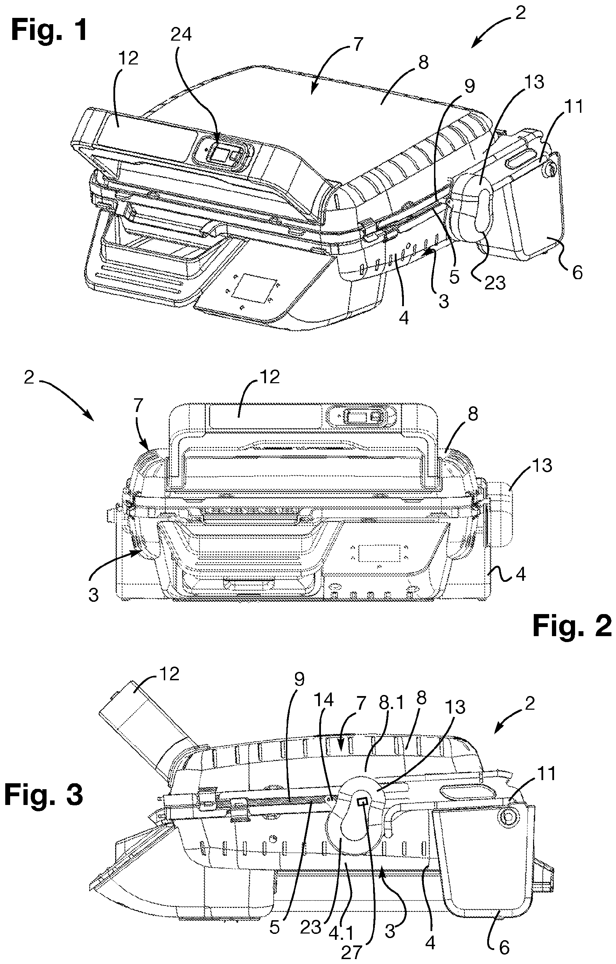

Les figures 1 à 9 représentent un appareil de cuisson 2 pour la cuisson de produits alimentaires, tels que notamment de la viande, du poisson ou des légumes. L'appareil de cuisson 2 est avantageusement un gril électrique.

L'appareil de cuisson 2 comporte une partie inférieure 3 comportant un corps inférieur 4, une plaque de cuisson inférieure 5 montée sur le corps inférieur 4 et un dispositif de chauffage inférieur (non représenté sur les figures) configuré pour chauffer la plaque de cuisson inférieure 5. Le dispositif de chauffage inférieur peut par exemple comporter un élément résistif chauffant, et être disposé entre le corps inférieur 4 et la plaque de cuisson inférieure 5.

Avantageusement, la partie inférieure 3 comporte également des pieds 6 afin de permettre un positionnement optimal de l'appareil de cuisson 2 sur un support, et pourrait également comprendre un bac de récupération pour récupérer les jus de cuisson.

L'appareil de cuisson 2 comporte en outre une partie supérieure 7 comportant un corps supérieur 8, une plaque de cuisson supérieure 9 montée sur le corps supérieur 8 et un dispositif de chauffage supérieur (non représenté sur les figures) configuré pour chauffer la plaque de cuisson supérieure 9. Le dispositif de chauffage supérieur peut par exemple comporter un élément résistif chauffant, et être disposé entre le corps supérieur 8 et la plaque de cuisson supérieure 9.

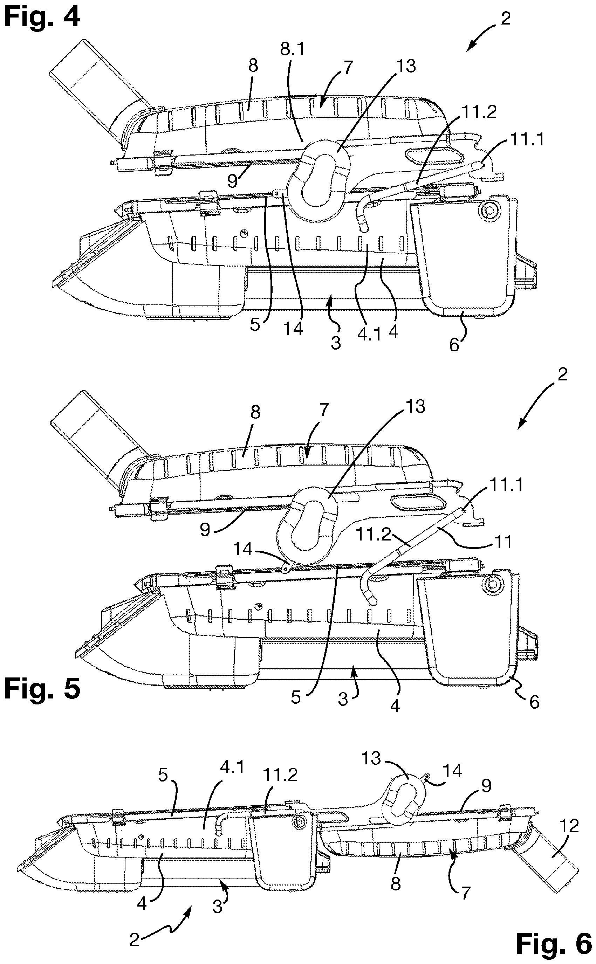

L'appareil de cuisson 2 comporte également un élément d'articulation 11 reliant la partie supérieure 7 à la partie inférieure 3. L'élément d'articulation 11 est plus particulièrement configuré de telle sorte que la partie supérieure 7 est montée articulée par rapport à la partie inférieure 3 entre une position de fermeture (voir les figures 1 à 3) dans laquelle la plaque de cuisson inférieure 5 et la plaque de cuisson supérieure 9 sont au contact l'une de l'autre, et une position d'ouverture complète (voir la figure 6) dans laquelle la plaque de cuisson inférieure 5 et la plaque de cuisson supérieure 9 s'étendent sensiblement dans un même plan et sont disposées sensiblement à 180° l'une de l'autre. La partie supérieure 7 est également configurée pour occuper une pluralité de positions de chargement situées entre la position de fermeture et la position d'ouverture complète et dans chacune desquelles un aliment peut être placé sur la plaque de cuisson inférieure, une position de chargement prédéterminée (voir la figure 5) située entre la position de fermeture et la position d'ouverture complète, et une pluralité de positions de cuisson (voir la figure 4), situées entre la position de fermeture et la position de chargement prédéterminée et dans chacune desquelles un aliment, en fonction de son épaisseur, est enserré entre la plaque de cuisson inférieure et la plaque de cuisson supérieure.

En outre, l'appareil de cuisson 2 comprend des moyens de blocage (non illustrés) de la partie supérieure 7 par rapport à la partie inférieure dans une position d'ouverture intermédiaire prédéterminée (non illustrée), située entre la position de fermeture et la position d'ouverture complète, notamment dans une position dans laquelle la plaque de cuisson supérieure 9 forme un angle sensiblement égal à 90° avec la plaque de cuisson inférieure 5.

Dans cette position intermédiaire, l'utilisateur peut placer l'aliment sur la plaque de cuisson inférieure 5 sans devoir maintenir la partie supérieure 7.

Selon le mode de réalisation représenté sur les figures 1 à 9, l'élément d'articulation 11 présente une forme générale de U, et comporte une portion centrale allongée 11.1 s'étendant le long d'un côté arrière du corps supérieur 8, et deux bras latéraux 11.2 s'étendant chacun à partir d'une extrémité respective de la portion centrale allongée 11.1. Avantageusement, la partie supérieure 7 est montée articulée sur la portion centrale allongée 11.1 autour d'un axe d'articulation, et chaque bras latéral 11.2 comporte une portion d'extrémité opposée à la portion centrale allongée 11.1 et montée articulée sur un côté latéral 4.1 respectif du corps inférieur 4.

L'appareil de cuisson 2 comporte en outre une poignée 12 fixée sur la partie supérieure 7, et plus particulièrement sur le corps supérieur 8, et permettant le déplacement de la partie supérieure 7 entre la position de fermeture et la position d'ouverture complète.

L'appareil de cuisson 2 comporte de plus un dispositif de mesure 13 configuré pour déterminer un écartement entre la plaque de cuisson inférieure 5 et la plaque de cuisson supérieure 9, et donc l'épaisseur d'un aliment disposé entre les plaques de cuisson inférieure et supérieure 5, 9. Selon le mode de réalisation représenté sur les figures 1 à 9, le dispositif de mesure 13 est monté sur un côté latéral de la partie supérieure 7, et plus particulièrement au niveau d'une portion centrale d'un côté latéral 8.1 du corps supérieur 8. Le dispositif de mesure 13 peut être fixé à demeure sur le corps supérieur 8 ou être monté amovible sur ce dernier.

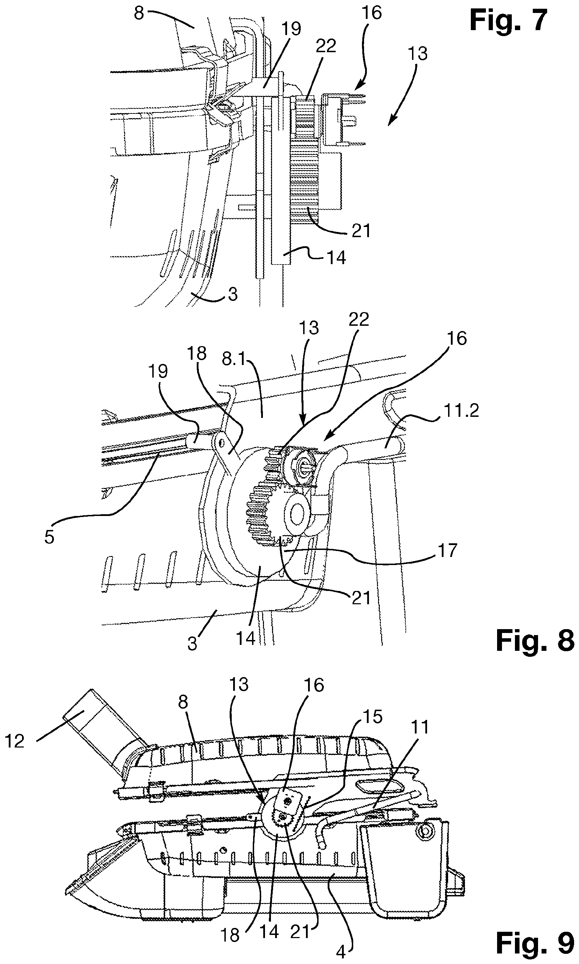

Le dispositif de mesure 13 comporte un élément d'actionnement 14 monté mobile entre une première position (voir les figures 5 et 6) et une deuxième position (voir la figure 3), un élément de sollicitation 15 (voir la figure 9) configuré pour solliciter l'élément d'actionnement 14 vers la première position, et un élément de mesure 16 (voir les figures 7 et 8) configuré pour coopérer avec l'élément d'actionnement 14 et pour déterminer l'écartement entre la plaque de cuisson inférieure 5 et la plaque de cuisson supérieure 9 en fonction de la position de l'élément d'actionnement 14.

L'appareil de cuisson 2 est plus particulièrement configuré de telle sorte qu'un déplacement de la partie supérieure 7 depuis la position de chargement prédéterminée à la position de fermeture entraîne un déplacement de l'élément d'actionnement 14 depuis la première position à la deuxième position, et de telle sorte qu'un déplacement de la partie supérieure 7 depuis la position de fermeture à la position de chargement prédéterminée entraîne un déplacement de l'élément d'actionnement 14 depuis la deuxième position à la première position. Avantageusement, l'appareil de cuisson 2 est configuré de telle sorte que l'élément d'actionnement 14 est maintenu dans la première position lorsque la partie supérieure 7 est déplacée entre la position de chargement prédéterminée et la position d'ouverture complète.

Ainsi, la position de chargement prédéterminée est une position particulière à partir de laquelle l'élément d'actionnement 14 est déplacé depuis sa première position vers sa deuxième position lorsque la partie supérieure et la partie inférieure sont déplacées l'une par rapport à l'autre vers la position de fermeture, et à partir de laquelle l'élément d'actionnement 14 demeure dans sa première position lorsque la partie supérieure et la partie inférieure sont déplacées l'une par rapport à l'autre vers la position d'ouverture complète.

Selon le mode de réalisation représenté sur les figures 1 à 9, l'élément d'actionnement 14 est monté pivotant autour d'un axe de pivotement, et l'élément de mesure 16 est configuré pour mesurer l'angle de rotation de l'élément d'actionnement 14 autour de son axe de pivotement, et pour déterminer l'écartement entre la plaque de cuisson inférieure 5 et la plaque de cuisson supérieure 9 à partir de cet angle de rotation mesuré.

Comme montré sur les figures 7 et 8, l'élément d'actionnement 14 comporte plus particulièrement une partie de montage 17 montée pivotante sur le corps supérieur 8. Selon le mode de réalisation représenté sur les figures 1 à 9, la partie de montage 17 présente une forme générale de disque, mais pourrait cependant présenter une toute autre forme.

L'élément d'actionnement 14 comporte en outre une partie d'appui 18 reliée à la partie de montage 17 et comportant avantageusement un doigt d'appui 19 configuré pour venir en appui contre la plaque de cuisson inférieure 5. Selon le mode de réalisation représenté sur les figures 1 à 9, la partie d'appui 18 présente une forme générale de manivelle, et le doigt d'appui 19 s'étend sensiblement parallèlement à l'axe de pivotement de l'élément d'actionnement 14.

Le dispositif de mesure 13 comporte également une première roue dentée 21 solidaire de la partie de montage 17 de l'élément d'actionnement 14, et ayant un axe de rotation confondu avec l'axe de pivotement de l'élément d'actionnement 14. Selon le mode de réalisation représenté sur les figures 1 à 9, la première roue dentée 21 et la partie de montage 17 sont réalisées en une seule pièce. Cependant, la première roue dentée 21 et la partie de montage 17 pourraient être distinctes et être fixées l'une sur l'autre.

Comme montré plus particulièrement sur la figure 8, l'élément de mesure 16 est un potentiomètre rotatif et comporte une deuxième roue dentée 22 configurée pour engrener avec la première roue dentée 21, de telle sorte qu'un pivotement de l'élément d'actionnement 14 entraîne une rotation de la deuxième roue dentée 22, et donc de la partie rotative du potentiomètre rotatif.

Avantageusement, le diamètre extérieur de la deuxième roue dentée 22 est inférieur au diamètre extérieur de la première roue dentée 21. Par exemple, le rapport de démultiplication entre la deuxième roue dentée 22 et la première roue dentée 21 est compris entre 1,5 et 2, et peut par exemple être de l'ordre de 1,75. L'appareil de cuisson 2 peut notamment être configuré de telle sorte qu'une variation de 40 mm de l'écartement entre la plaque de cuisson inférieure 5 et la plaque de cuisson supérieure 9 entraîne une rotation angulaire du potentiomètre rotatif de 160°.

L'élément de sollicitation 15 pourrait par exemple être logé dans l'élément de mesure 16, par exemple dans le corps du potentiomètre rotatif, ou comme cela est montré sur la figure 9, l'élément de sollicitation 15 pourrait comprendre une première extrémité reliée à la première roue dentée 21, et une deuxième extrémité reliée à la partie supérieure 7.

Un tel élément de sollicitation 15 peut par exemple être un ressort.

Comme montré notamment sur la figure 1, le dispositif de mesure 13 comporte également un élement de protection 23, tel un capot de protection, recouvrant l'élément de mesure 16 et en partie l'élément d'actionnement 14.

Avantageusement, le dispositif de mesure 13 comporte de plus une carte électronique (non représentée sur les figures) configurée pour analyser et traiter les mesures effectuées par l'élément de mesure 16. Une telle carte électronique peut par exemple comprendre ou être reliée à un module de communication sans fil, notamment du type Bluetooth Low Energy ou wifi, configuré pour communiquer avec une unité de traitement déportée, par exemple intégrée dans un terminal du type ordinateur portable ou un ordiphone, et pour transmettre les mesures effectuées par l'élément de mesure 16 à l'unité de traitement.

De façon avantageuse, l'appareil de cuisson 2 comporte en outre une unité de gestion de cuisson configurée pour gérer la cuisson d'un aliment disposé entre les plaques de cuisson inférieure et supérieure 5, 9 en fonction de l'écartement déterminé par le dispositif de mesure 13.

Avantageusement, l'appareil de cuisson 2 pourrait comporter un élément d'affichage 27, tel qu'un élément d'affichage numérique, configuré pour afficher l'écartement entre la plaque de cuisson inférieure 5 et la plaque de cuisson supérieure 9. Comme montré notamment sur la figure 3, le dispositif de mesure 13 pourrait comporter l'élément d'affichage 27 dont l'affichage serait visible par exemple à travers une fenêtre prévue sur le capot de protection 23. Selon un tel mode de réalisation de l'invention, le dispositif de mesure 13 pourrait comporter une source d'alimentation électrique autonome, telle qu'une batterie ou une pile, configurée notamment pour alimenter électriquement l'élément d'affichage 27.

Un procédé d'utilisation d'un tel appareil de cuisson 2 va maintenant être décrit. Un tel procédé d'utilisation comporte les étapes suivantes :
- mise sous tension de l'appareil de cuisson 2, par exemple en appuyant sur une touche ou bouton marche/arrêt d'une interface 24 que présente l'appareil de cuisson 2 ;
- si cela est prévu, sélection du type d'aliment à cuire au moyen de l'interface 24 ;
- si cela est encore prévu, sélection d'un degré de cuisson souhaité de l'aliment, par exemple saignant. Les températures de cuisson pourraient cependant être déterminées par l'appareil de cuisson 2 en fonction du type d'aliment sélectionné ;
- si cela est encore prévu, détermination automatique de la température de préchauffage de l'appareil de cuisson 2 ;
- déplacement de la partie supérieure 7 dans une position de chargement, cette étape pouvant être réalisée à n'importe quel moment des étapes susmentionnées ;
- mise en place de l'aliment sur la plaque de cuisson inférieure 5 ;
- déplacement de la partie supérieure 7 dans une position de cuisson de telle sorte que la plaque de cuisson supérieure 9 vienne en appui contre l'aliment ;
- détermination automatique de l'écartement entre la plaque de cuisson supérieure 9 et la plaque de cuisson inférieure 5, et donc de l'épaisseur de l'aliment disposé alors entre les plaques de cuisson inférieure et supérieure 5, 9, par la mesure de l'angle de rotation de l'élément d'actionnement 14 ;
- activation automatique du début de cuisson de l'aliment ;
- à l'issu de la cuisson de l'aliment, l'utilisateur peut retirer l'aliment de la plaque de cuisson inférieure 5 ou le laisser au chaud entre les plaques de cuisson inférieure et supérieure 5, 9 ;
- mise hors tension de l'appareil de cuisson 2 en sélectionnant la touche marche/arrêt ou en débranchant l'appareil de cuisson 2.

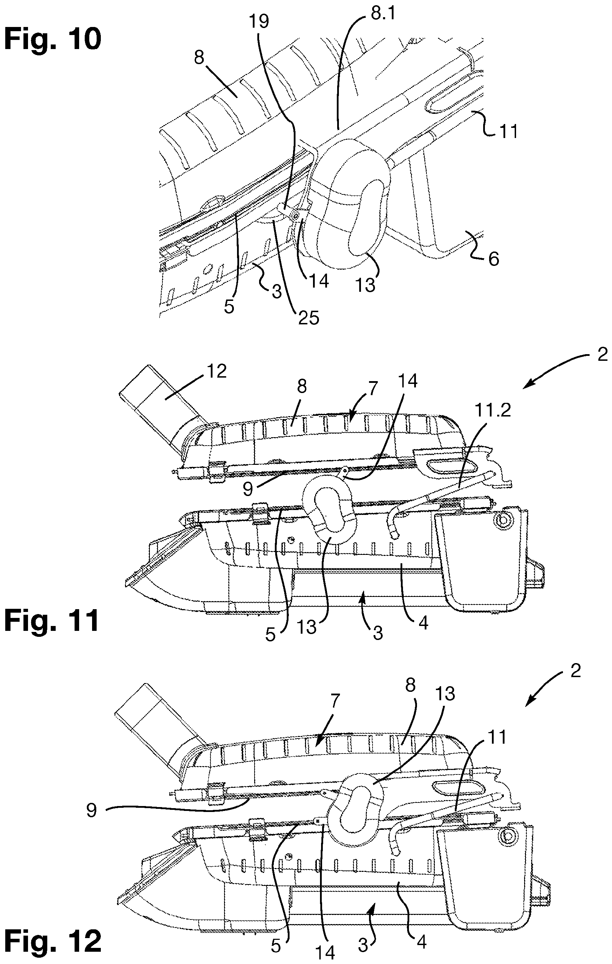

La figure 10 représente un appareil de cuisson 2 selon un deuxième mode de réalisation de l'invention qui diffère du premier mode de réalisation essentiellement en ce que le doigt d'appui 19 est configuré pour venir en appui contre une surface de butée 25 ménagée sur le corps inférieur 4, et donc décalée par rapport à la plaque de cuisson inférieure 5. Une telle configuration du dispositif de mesure 13 facilite notamment le retrait de la plaque de cuisson inférieure 5 en vue de son nettoyage.

La figure 11 représente un appareil de cuisson 2 selon un troisième mode de réalisation de l'invention qui diffère du premier mode de réalisation essentiellement en ce que le dispositif de mesure 13 est porté par la partie inférieure 3 et en ce que le doigt d'appui 19 est configuré pour venir en appui contre la plaque de cuisson supérieure 9. Le doigt d'appui 19 pourrait cependant être configuré pour venir en appui contre une surface de butée ménagée sur le corps supérieur 8.

La figure 12 représente un appareil de cuisson selon un quatrième mode de réalisation de l'invention qui diffère du premier mode de réalisation essentiellement en ce que le dispositif de mesure 13 comporte deux doigts d'appui configurés pour prendre appui respectivement sur la partie inférieure 3 et la partie supérieure 7, et par exemple respectivement sur la plaque de cuisson inférieure 5 et la plaque de cuisson supérieure 9. Une telle configuration du dispositif de mesure 13 permet de réduire la chaîne de cote, et de ce fait les incertitudes liées au positionnement des plaques de cuisson inférieure et supérieure 5, 9 et donc d'augmenter encore la résolution de la mesure de l'écartement entre les plaques de cuisson inférieure et supérieure 5, 9.

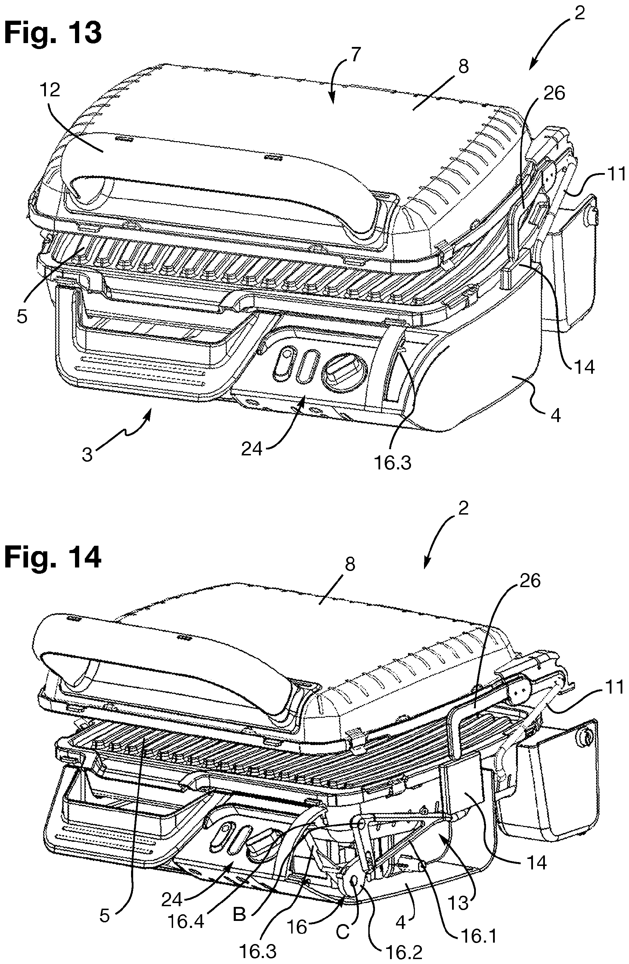

Les figures 13 et 14 représentent un appareil de cuisson selon un cinquième mode de réalisation de l'invention qui diffère du premier mode de réalisation essentiellement en ce que l'élément de mesure 16 est intégralement mécanique, et en ce que l'élément d'actionnement 14 est monté mobile en translation sur le corps inférieur 4 selon une direction de déplacement sensiblement transversale à un plan général de la plaque de cuisson inférieure 5, c'est-à-dire sensiblement verticale. Selon un tel mode de réalisation de l'invention, la partie supérieure 7 comporte une portion d'appui 26 configurée pour coopérer avec l'élément d'actionnement 14, et l'appareil de cuisson 2 est configuré de telle sorte qu'un déplacement de la partie supérieure 7 depuis la position de chargement prédéterminée vers la position de fermeture entraîne une translation de l'élément d'actionnement 14 depuis la première position à la deuxième position, et de telle sorte qu'un déplacement de la partie supérieure 7 depuis la position de fermeture vers la position de chargement prédéterminée entraîne une translation de l'élément d'actionnement 14 depuis la deuxième position à la première position.

Ce cinquième mode de réalisation permet de se dispenser de l'utilisation d'une carte électronique.

Selon ce cinquième mode de réalisation de l'invention, l'élément de mesure 16 comporte un organe de liaison 16.1 monté pivotant sur la partie inférieure 3 autour d'un axe de rotation B et relié à l'élément d'actionnement 14 de telle sorte qu'un déplacement en translation de l'élément d'actionnement 14 entraîne en rotation l'organe de liaison 16.1 autour de son axe de rotation B. L'élément de mesure 16 comporte également un organe de support 16.2 monté pivotant sur la partie inférieure 3 autour d'un axe de rotation C, et lié à l'organe de liaison 16.1 de telle sorte qu'un pivotement de l'organe de liaison 16.1 autour de son axe de rotation B entraîne en rotation l'organe de support 16.2 autour de son axe de rotation C. L'organe de support 16.2 comporte plus particulièrement un repère de lecture 16.3 pourvu d'un doigt de lecture 16.4 apte à se déplacer le long d'une série de graduations prévue sur la partie inférieure 3 et dont chaque graduation correspond à une valeur d'écartement entre les plaques de cuisson inférieure et supérieure 5, 9.

Cette valeur d'écartement permet ensuite à un utilisateur d'estimer un temps de cuisson à partir d'un abaque.

Selon une variante de réalisation du cinquième mode de réalisation, l'élément de mesure 16 pourrait être un potentiomètre linéaire relié directement à l'élément d'actionnement 14 ou bien un capteur à effet Hall.

Le dispositif de mesure 13 selon le cinquième mode de réalisation de l'invention pourrait avantageusement comporter un soufflet de protection, par exemple en silicone, recouvrant l'élément d'actionnement 14.

Comme il va de soi, l'invention ne se limite pas aux seules formes d'exécution de cet appareil de cuisson, décrites ci-dessus à titre d'exemples, elle en embrasse au contraire toutes les variantes de réalisation, l'objet de la protection étant défini dans les revendications.

## Revendications

1. Appareil de cuisson (2) pour la cuisson de produits alimentaires, comportant :
- une partie inférieure (3) comportant une plaque de cuisson inférieure (5),
- une partie supérieure (7) comportant une plaque de cuisson supérieure (9),
- un élément d'articulation (11) reliant la partie supérieure (7) à la partie inférieure (3) et configuré de telle sorte que la partie supérieure (7) est montée articulée par rapport à la partie inférieure (3) pour définir au moins une position de chargement dans laquelle un aliment peut être placé sur la plaque de cuisson inférieure (5) et au moins une position de cuisson dans laquelle l'aliment est enserré entre la plaque de cuisson inférieure (5) et la plaque de cuisson supérieure (9), **caractérisé en ce que** l'appareil de cuisson comporte:
- un dispositif de mesure (13) configuré pour déterminer un écartement entre la plaque de cuisson inférieure (5) et la plaque de cuisson supérieure (9), le dispositif de mesure (13) étant porté par l'une parmi la partie inférieure (3) et la partie supérieure (7),
- une unité de gestion de cuisson configurée pour gérer la cuisson d'un aliment disposé entre la plaque de cuisson inférieure (5) et la plaque de cuisson supérieure (9) en fonction de l'écartement déterminé par le dispositif de mesure (13), et **en ce que** le dispositif de mesure (13) comporte :
- un élément d'actionnement (14) monté mobile entre une première position et une deuxième position dans lesquelles l'élément d'actionnement est en appui contre l'autre parmi la partie inférieure et la partie supérieure, l'appareil de cuisson (2) étant configuré de telle sorte qu'un déplacement de la partie supérieure (7) entre une position de chargement prédéterminée et une position de cuisson entraîne un déplacement de l'élément d'actionnement (14) entre la première position et la deuxième position, et
- un élément de mesure (16) configuré pour coopérer avec l'élément d'actionnement (14) et pour déterminer l'écartement entre la plaque de cuisson inférieure (5) et la plaque de cuisson supérieure (9) en fonction de la position de l'élément d'actionnement (14) entre la première position et la deuxième position.

2. Appareil de cuisson (2) selon la revendication 1, dans lequel l'élément de mesure (16) est configuré pour mesurer une caractéristique représentative de la position de l'élément d'actionnement (14) et pour déterminer l'écartement entre la plaque de cuisson inférieure et la plaque de cuisson supérieure à partir de la caractéristique représentative mesurée.

3. Appareil de cuisson (2) selon la revendication 1 ou 2, dans lequel l'élément d'actionnement (14) est monté pivotant autour d'un axe de pivotement, l'appareil de cuisson (2) étant configuré de telle sorte qu'un déplacement de la partie supérieure (7) entre la position de chargement prédéterminée et la position de cuisson entraîne en rotation l'élément d'actionnement (14) autour de son axe de pivotement.

4. Appareil de cuisson (2) selon la revendication 3, dans lequel l'élément de mesure (16) est configuré pour mesurer l'angle de rotation de l'élément d'actionnement (14) autour de son axe de pivotement et pour déterminer l'écartement entre la plaque de cuisson inférieure (5) et la plaque de cuisson supérieure (9) à partir de l'angle de rotation mesuré.

5. Appareil de cuisson (2) selon l'une quelconque des revendications 1 à 4, dans lequel l'élément d'actionnement (14) est configuré pour venir en appui contre l'une parmi la plaque de cuisson inférieure (5) et la plaque de cuisson supérieure (9).

6. Appareil de cuisson (2) selon l'une quelconque des revendications 1 à 5, dans lequel le dispositif de mesure (13) est disposé sur un côté latéral de l'une parmi la partie inférieure (3) et la partie supérieure (7).

7. Appareil de cuisson (2) selon la revendication 6, dans lequel le dispositif de mesure (13) est disposé au niveau d'une portion centrale d'un côté latéral de l'une parmi la partie inférieure (3) et la partie supérieure (7).

8. Appareil de cuisson (2) selon l'une quelconque des revendications 1 à 7, dans lequel le dispositif de mesure (13) est monté amovible sur l'une parmi la partie inférieure (3) et la partie supérieure (7).

9. Appareil de cuisson (2) selon l'une quelconque des revendications 1 à 8, dans lequel le dispositif de mesure (13) comporte un élément de sollicitation configuré pour solliciter l'élément d'actionnement (14) vers la première position.

10. Appareil de cuisson (2) selon l'une quelconque des revendications 1 à 9, dans lequel l'élément de mesure (16) comporte un potentiomètre ou un système de détection électromagnétique, notamment à effet Hall.

11. Appareil de cuisson (2) selon l'une quelconque des revendications 1 à 10, lequel comporte un élément d'affichage configuré pour afficher l'écartement entre la plaque de cuisson inférieure (5) et la plaque de cuisson supérieure (9).

12. Appareil de cuisson (2) selon l'une quelconque des revendications 1 à 11, dans lequel l'élément d'articulation (11) est configuré de telle sorte que la partie supérieure (7) est montée articulée par rapport à la partie inférieure (3) entre une position de fermeture dans laquelle la plaque de cuisson supérieure (9) est au contact de la plaque de cuisson inférieure (5) et une position d'ouverture complète dans laquelle la plaque de cuisson inférieure (5) et la plaque de cuisson supérieure (9) sont disposées sensiblement à 180° l'une de l'autre.

13. Appareil de cuisson (2) selon la revendication 12, comprenant des moyens de blocage de la partie supérieure (7) par rapport à la partie inférieure dans une position d'ouverture intermédiaire prédéterminée, située entre la position de fermeture et la position d'ouverture complète, notamment dans une position dans laquelle la plaque de cuisson supérieure (9) forme un angle sensiblement égal à 90° avec la plaque de cuisson inférieure (5).

14. Appareil de cuisson (2) selon l'une des revendications 12 à 13, lequel est configuré de telle sorte que l'élément d'actionnement (14) est maintenu dans la première position lorsque la partie supérieure (7) est déplacée entre la position de chargement prédéterminée et la position d'ouverture complète.

15. Appareil de cuisson (2) selon l'une quelconque des revendications 1 à 14, dans lequel le dispositif de mesure (13) comporte une première roue dentée (21) solidaire de l'élément d'actionnement (14) et l'élément de mesure (16) comporte une deuxième roue dentée (22) couplée en rotation à la première roue dentée (21).

16. Appareil de cuisson (2) selon l'une quelconque des revendications 1 à 15, dans lequel le dispositif de mesure (13) comporte un élément de protection (23) recouvrant au moins en partie l'élément d'actionnement et/ou l'élément de mesure (16).

## Patentansprüche

1. Gareinrichtung (2) zum Garen von Lebensmitteln, umfassend:
- ein Unterteil (3) mit einer unteren Garplatte (5),
- ein Oberteil (7) mit einer oberen Garplatte (9),
- ein Gelenkelement (11), das das Oberteil (7) mit dem Unterteil (3) verbindet und so konfiguriert ist, dass das Oberteil (7) in Bezug auf das Unterteil (3) gelenkig gelagert ist, um mindestens eine Belegungsposition zu definieren, in der ein Lebensmittel auf die untere Garplatte (5) gelegt werden kann, und mindestens eine Garposition zu definieren, in der das Lebensmittel zwischen der unteren Garplatte (5) und der oberen Garplatte (9) eingeschlossen ist, **dadurch gekennzeichnet, dass** das Gareinrichtung umfasst:
- eine Messvorrichtung (13), die konfiguriert ist, um einen Abstand zwischen der unteren Garplatte (5) und der oberen Garplatte (9) zu bestimmen, wobei die Messvorrichtung (13) von einem des Unterteils (3) oder Oberteils (7) getragen wird,
- eine Garungssteuereinheit, die konfiguriert ist, um das Garen eines zwischen der unteren Garplatte (5) und der oberen Garplatte (9) angeordneten Lebensmittels in Abhängigkeit von dem durch die Messvorrichtung (13) bestimmten Abstand zu steuern, und dass die Messvorrichtung (13) umfasst:
- ein Aktivierungselement (14), das zwischen einer ersten Position und einer zweiten Position beweglich montiert ist, in denen das Aktivierungselement gegen das jeweils andere des Unterteils und Oberteils drückt, wobei das Gareinrichtung (2) so konfiguriert ist, dass eine Bewegung des Oberteils (7) zwischen einer vorbestimmten Belegungsposition und einer Garposition eine Bewegung des Aktivierungselements (14) zwischen der ersten Position und der zweiten Position bewirkt, und
- ein Messelement (16), das konfiguriert ist, um mit dem Aktivierungselement (14) zusammenzuwirken und den Abstand zwischen der unteren Garplatte (5) und der oberen Garplatte (9) in Abhängigkeit von der Position des Aktivierungselements (14) zwischen der ersten Position und der zweiten Position zu bestimmen

2. Gareinrichtung (2) nach Anspruch 1, wobei das Messelement (16) konfiguriert ist, um ein repräsentatives Merkmal der Position des Aktivierungselements (14) zu messen und den Abstand zwischen der unteren Garplatte und der oberen Garplatte anhand des gemessenen repräsentativen Merkmals zu bestimmen.

3. Gareinrichtung (2) nach Anspruch 1 oder 2, wobei das Aktivierungselement (14) um eine Schwenkachse schwenkbar gelagert ist, wobei das Gareinrichtung (2) so konfiguriert ist, dass eine Bewegung des Oberteils (7) zwischen der vorbestimmten Belegungsposition und der Garposition das Aktivierungselement (14) um seine Schwenkachse in Drehung versetzt.

4. Gareinrichtung (2) nach Anspruch 3, wobei das Messelement (16) konfiguriert ist, um den Drehwinkel des Aktivierungselements (14) um seine Schwenkachse zu messen und den Abstand zwischen der unteren Garplatte (5) und der oberen Garplatte (9) anhand des gemessenen Drehwinkels zu bestimmen.

5. Gareinrichtung (2) nach einem der Ansprüche 1 bis 4, wobei das Aktivierungselement (14) konfiguriert ist, um gegen eine der unteren Garplatte (5) oder oberen Garplatte (9) zu drücken.

6. Gareinrichtung (2) nach einem der Ansprüche 1 bis 5, wobei die Messvorrichtung (13) an einer Seitenfläche von einem des Unterteils (3) oder Oberteils (7) angeordnet ist.

7. Gareinrichtung (2) nach Anspruch 6, wobei die Messvorrichtung (13) an einem mittleren Abschnitt einer Seitenfläche von einem des Unterteils (3) oder Oberteils (7) angeordnet ist.

8. Gareinrichtung (2) nach einem der Ansprüche 1 bis 7, wobei die Messvorrichtung (13) abnehmbar an einem des Unterteils (3) oder Oberteils (7) angebracht ist.

9. Gareinrichtung (2) nach einem der Ansprüche 1 bis 8, wobei die Messvorrichtung (13) ein Beanspruchungselement aufweist, das konfiguriert ist, um das Aktivierungselement (14) in die erste Position zu bewegen.

10. Gareinrichtung (2) nach einem der Ansprüche 1 bis 9, wobei das Messelement (16) ein Potentiometer oder ein elektromagnetisches Sensorsystem, insbesondere ein Hall-Effekt-Sensorsystem, umfasst.

11. Gareinrichtung (2) nach einem der Ansprüche 1 bis 10, das ein Anzeigeelement umfasst, das konfiguriert ist, um den Abstand zwischen der unteren Garplatte (5) und der oberen Garplatte (9) anzuzeigen.

12. Gareinrichtung (2) nach einem der Ansprüche 1 bis 11, wobei das Gelenkelement (11) so konfiguriert ist, dass das Oberteil (7) in Bezug auf das Unterteil (3) gelenkig gelagert ist zwischen einer geschlossenen Position, in der die obere Garplatte (9) die untere Garplatte (5) berührt, und einer vollständig geöffneten Position, in der die untere Garplatte (5) und die obere Garplatte (9) im Wesentlichen in einem Winkel von 180° voneinander entfernt angeordnet sind.

13. Gareinrichtung (2) nach Anspruch 12, mit Mitteln zum Feststellen des Oberteils (7) in Bezug auf das Unterteil in einer vorbestimmten Zwischenöffnungsposition, die zwischen der geschlossenen Position und der vollständig geöffneten Position liegt, insbesondere in einer Position, in der die obere Garplatte (9) einen Winkel von im Wesentlichen 90° mit der unteren Garplatte (5) bildet.

14. Gareinrichtung (2) nach einem der Ansprüche 12 bis 13, das so konfiguriert ist, dass das Aktivierungselement (14) in der ersten Position gehalten wird, wenn das Oberteil (7) zwischen der vorbestimmten Belegungsposition und der vollständig geöffneten Position bewegt wird.

15. Gareinrichtung (2) nach einem der Ansprüche 1 bis 14, wobei die Messvorrichtung (13) ein erstes Zahnrad (21) umfasst, das fest mit dem Aktivierungselement (14) verbunden ist, und das Messelement (16) ein zweites Zahnrad (22) umfasst, das drehbar mit dem ersten Zahnrad (21) gekoppelt ist.

16. Gareinrichtung (2) nach einem der Ansprüche 1 bis 15, wobei die Messvorrichtung (13) ein Schutzelement (23) umfasst, das das Aktivierungselement und/oder das Messelement (16) zumindest teilweise überdeckt.

## Claims

1. Cooking appliance (2) for cooking food products, comprising:
- a lower portion (3) comprising a lower cooking plate (5),
- an upper portion (7) comprising an upper cooking plate (9),
- a hinging element (11) connecting the upper portion (7) to the lower portion (3) and configured such that the upper portion (7) is hingedly mounted with respect to the lower portion (3) to define at least one loading position wherein a food can be placed on a lower cooking plate (5) and at least one cooking position wherein the food is surrounded between the lower cooking plate (5) and the upper cooking plate (9), **characterised in that** the cooking appliance comprises:
- a measurement device (13) configured to determine a separation between the lower cooking plate (5) and the upper cooking plate (9), the measurement device (13) being supported by one from among the lower portion (3) and the upper portion (7),
- a cooking management unit configured to manage the cooking of a food arranged between the lower cooking plate (5) and the upper cooking plate (9) according to the separation determined by the measurement device (13), and **in that** the measurement device (13) comprises:
- an actuating element (14) mounted movably between a first position and a second position wherein the actuating element is born against the other from among the lower portion and the upper portion, the cooking appliance (2) being configured such that a movement of the upper portion (7) between a predetermined loading position and a cooking position drives a movement of the actuating element (14) between the first position and the second position, and
- a measurement element (16) configured to engage with the actuating element (14) and to determine the separation between the lower cooking plate (5) and the upper cooking plate (9) according to the position of the actuating element (14) between the first position and the second position.

2. Cooking appliance (2) according to claim 1, wherein the measurement element (16) is configured to measure a characteristic representative of the position of the actuating element (14) and to determine the separation between the lower cooking plate and the upper cooking plate from the measured representative characteristic.

3. Cooking appliance (2) according to claim 1 or 2, wherein the actuating element (14) is mounted pivoting about a pivot axis, the cooking appliance (2) being configured such that a movement of the upper portion (7) between the predetermined loading position and the cooking position rotates the actuating element (14) about its pivot axis.

4. Cooking appliance (2) according to claim 3, wherein the measurement element (16) is configured to measure the angle of rotation of the actuating element (14) about its pivot axis and to determine the separation between the lower cooking plate (5) and the upper cooking plate (9) from the measured angle of rotation.

5. Cooking appliance (2) according to any one of claims 1 to 4, wherein the actuating element (14) is configured to bear against one from among the lower cooking plate (5) and the upper cooking plate (9).

6. Cooking appliance (2) according to any one of claims 1 to 5, wherein the measurement device (13) is arranged on a lateral side of one from among the lower portion (3) and the upper portion (7).

7. Cooking appliance (2) according to claim 6, wherein the measurement device (13) is arranged at the level of a central portion of a lateral side of one from among the lower portion (3) and the upper portion (7).

8. Cooking appliance (2) according to any one of claims 1 to 7, wherein the measurement device (13) is mounted movably on one from among the lower portion (3) and the upper portion (7).

9. Cooking appliance (2) according to any one of claims 1 to 8, wherein the measurement device (13) comprises an urging element configured to urge the actuating element (14) towards the first position.

10. Cooking appliance (2) according to any one of claims 1 to 9, wherein the measurement element (16) comprises a potentiometer or an electromagnetic detection system, in particular a Hall effect electromagnetic detection system.

11. Cooking appliance (2) according to any one of claims 1 to 10, which comprises a display element configured to display the separation between the lower cooking plate (5) and the upper cooking plate (9).

12. Cooking appliance (2) according to any one of claims 1 to 11, wherein the hinging element (11) is configured such that the upper portion (7) is hingedly mounted with respect to the lower portion (3) between a closing position wherein the upper cooking plate (9) is in contact with the lower cooking plate (5) and a complete opening position wherein the lower cooking plate (5) and the upper cooking plate (9) are arranged substantially at 180° from one another.

13. Cooking appliance (2) according to claim 12, comprising means for blocking the upper portion (7) with respect to the lower portion in a predetermined intermediate opening position, located between the closing position and the complete opening position, in particular in a position wherein the upper cooking plate (9) forms an angle substantially equal to 90° with the lower cooking plate (5).

14. Cooking appliance (2) according to one of claims 12 to 13, which is configured such that the actuating element (14) is held in the first position when the upper portion (7) is moved between the predetermined loading position and the complete opening position.

15. Cooking appliance (2) according to any one of claims 1 to 14, wherein the measurement device (13) comprises a first gearwheel (21) integral with the actuating element (14) and the measurement element (16) comprises a second gearwheel (22) coupled in rotation to the first gearwheel (21).

16. Cooking appliance (2) according to any one of claims 1 to 15, wherein the measurement device (13) comprises a protective element (23) covering at least partially the actuating element and/or the measurement element (16).
